# EUROPÄISCHE PATENTSCHRIFT

(11) **EP 2 201 174 B1**
(45) Veröffentlichungstag und Bekanntmachung des Hinweises auf die Patenterteilung: **11.01.2012**
(21) Anmeldenummer: 08785368.5
(22) Anmeldetag: 06.08.2008
(51) Int. Cl.: B23K 11/00, B23K 37/04, E01B 29/42

(54) **SCHWEISSAGGREGAT ZUM VERSCHWEISSEN ZWEIER SCHIENEN EINES GLEISES**
WELDING DEVICE FOR WELDING TOGETHER TWO RAILS OF A TRACK
GROUPE DE SOUDAGE DESTINÉ À SOUDER DEUX RAILS D'UNE VOIE DE CHEMIN DE FER

(30) Priorität: 20.09.2007 AT 14762007
(43) Veröffentlichungstag der Anmeldung: 30.06.2010
(73) Patentinhaber: Franz Plasser Bahnbaumaschinen-Industriegesellschaft m.b.H., 1010 Wien (AT)
(72) Erfinder: Die Erfindernennung liegt noch nicht vor
(86) Internationale Anmeldenummer: PCT/EP2008/006443
(87) Internationale Veröffentlichungsnummer: WO 2009/039915

(56) Entgegenhaltungen:
- EP-A- 0 132 227
- EP-A- 0 597 215
- US-A1- 2003 141 283

## Beschreibung

Die Erfindung betrifft ein Schweißaggregat zum Verschweißen zweier Schienen eines Gleises, bestehend aus zwei in Schienenlängsrichtung zueinander verschiebbaren Aggregathälften, denen jeweils ein Paar von zur Stromübertragung vorgesehenen, Kontaktflächen zur Anlage an die Schiene aufweisenden Elektroden zugeordnet sind, die jeweils zwei voneinander getrennte Kontaktflächen aufweisen.

Ein derartiges Schweißaggregat ist durch US 6 762 390 bekannt, wobei die zur Stromübertragung vorgesehenen Elektroden zwischen Schienenkopf und -fuß an den Schienensteg angepresst werden. Dies hat den Nachteil, dass in diesem Bereich befindliche Schienenprägungen, die verschiedene Daten bezüglich der Schienenherstellung beinhalten, vorher weggeschliffen werden müssen.

Ein aus EP 0 597 215 A1 bekanntes Schweißaggregat weist Elektroden mit zwei voneinander getrennten Kontaktflächen auf. Diese dienen zur Anlage an außen gelegene Seitenflächen des Schienenkopfes bzw. -fußes.

Die Aufgabe der vorliegenden Erfindung liegt nun in der Schaffung eines Schweißaggregates der eingangs genannten Art, mit dem unabhängig von Schienenprägungen ein optimaler Schienenkontakt herstellbar ist.

Diese Aufgabe wird erfindungsgemäß mit einem Schweißaggregat der gattungsgemäßen Art dadurch gelöst, dass die beiden Kontaktflächen in Abhängigkeit von der zu verschweißenden Schienentype einen spitzen Winkel miteinander einschließen, wobei die - bezüglich einer Vertikalen - obere Kontaktfläche der Elektrode zur Anlage an eine an einen Schienensteg angrenzende untere Flanke eines Schienenkopfes und die untere Kontaktfläche zur Anlage an eine ebenfalls an den Schienensteg angrenzende Schienenfußflanke ausgebildet ist.

Mit einer derartig ausgebildeten Kontaktfläche sind Schienenprägungen am Schienensteg ohne jeden Einfluss auf die Elektroden bzw. die Schweißqualität. Außerdem ist durch die geneigt angeordneten, quasi einen Keil bildenden Kontaktflächen eine ausgezeichnete Klemmwirkung mit der Schiene und damit ein optimaler Stromfluss erzielbar.

Weitere Vorteile der Erfindung ergeben sich aus den Unteransprüchen und der Zeichnungsbeschreibung.

Im Folgenden wird die Erfindung anhand von in der Zeichnung dargestellten Ausführungsbeispielen näher beschrieben. Es zeigen:

Fig. 1 eine vereinfachte Seitenansicht eines Schweißaggregates,

Fig. 2 eine Ansicht eines Elektrodenpaares, und

Fig. 3, 4 je ein Detail einer Elektrodenbefestigung.

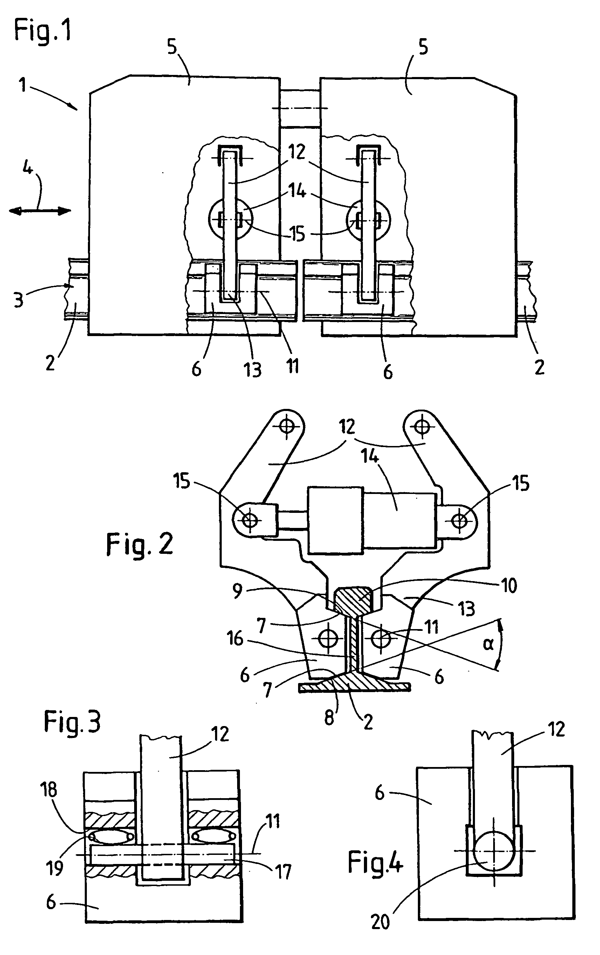

Ein in Fig. 1 dargestelltes Schweißaggregat 1 zum Verschweißen zweier Schienen 2 eines Gleises 3 weist zwei in einer Schienenlängsrichtung 4 hintereinander angeordnete Aggregathälften 5 auf. Diesen ist jeweils ein Paar von Elektroden 6 (s. auch Fig. 2) zugeordnet, die für eine Stromübertragung zur Anlage an die zu verschweißenden Schienen 2 vorgesehen sind. Ein derartiges Schweißaggregat 1 zum Abbrennstumpfschweißen ist bereits vielfach bekannt, so dass auf weitere Details nicht näher eingegangen wird.

Wie in Fig. 2 ersichtlich, weist jede Elektrode 6 zwei voneinander getrennte Kontaktflächen 7 auf. Von diesen ist die - bezüglich einer Vertikalen - obere Kontaktfläche 7 zur Anlage an eine untere Flanke 9 eines Schienenkopfes 10 ausgebildet. Die gegenüberliegende untere Kontaktfläche 7 ist zur Anlage an eine Schienenfußflanke 8 der Schiene 2 vorgesehen. Die beiden Kontaktflächen 7 einer Elektrode 6 schließen einen spitzen Winkel α ein. Dieser hängt von der Type der zu verschweißenden Schienen 2 ab. Eine zwischen den beiden Kontaktflächen 7 gelegene Fläche der Elektrode 6 ist bei deren Anlage an die Schiene 2 von einem Schienensteg 16 distanziert.

Jede Elektrode 6 ist um eine parallel zur Schienenlängsrichtung 4 verlaufende Achse 11 verschwenkbar auf einem unteren Ende 13 eines Elektrodenhebels 12 gelagert. Beide in einer normal zur Schienenlängsrichtung 4 verlaufenden Richtung einander gegenüberliegende Elektrodenhebel 12 sind durch einen Antrieb 14 jeweils um eine Hebelachse 15 verschwenkbar auf der Aggregathälfte 5 befestigt. Die Hebelachse 15 und die Achse 11 der Elektrode 6 verlaufen parallel zueinander.

In Fig. 3 ist eine Variante einer Lagerung der Elektrode 6 dargestellt. Bei dieser ist ein die Achse 11 bildender Schwenkbolzen 17 in einem vertikal verlaufenden Langloch 18 gelagert und gegen den Widerstand einer Feder 19 relativ zum Elektrodenhebel 12 verschiebbar. Damit ist eine geringfügige Bewegungsfreiheit der Elektrode 6 zur besseren Anpassung an die beiden zu verschweißenden Schienenenden gewährleistet.

Gemäß Fig. 4 ist die Elektrode 6 über ein allseitig bewegbares Gelenk 20 mit dem Elektrodenhebel 12 verbunden.

## Patentansprüche

1. Schweißaggregat zum Verschweißen zweier Schienen (2) eines Gleises (3), bestehend aus zwei in Schienenlängsrichtung zueinander verschiebbaren Aggregathälften (5), denen jeweils ein Paar von zur Stromübertragung vorgesehenen, Kontaktflächen (7) zur Anlage an die Schiene (2) aufweisenden Elektroden (6) zugeordnet sind, die jeweils zwei voneinander getrennte Kontaktflächen (7) aufweisen, **dadurch gekennzeichnet, dass** die beiden Kontaktflächen (7) in Abhängigkeit von der zu verschweißenden Schienentype einen spitzen Winkel α miteinander einschließen, wobei die - bezüglich einer Vertikalen - obere Kontaktfläche (7) der Elektrode (6) zur Anlage an eine an einen Schienensteg (16) angrenzende untere Flanke (9) eines Schienenkopfes (10) und die untere Kontaktfläche (7) zur Anlage an eine ebenfalls an den Schienensteg 16 angrenzende Schienenfußflanke (8) ausgebildet ist.

2. Schweißaggregat nach Anspruch 1, **dadurch gekennzeichnet, dass** jede Elektrode (6) um eine parallel zur Schienenlängsrichtung (4) verlaufende Achse (11) verschwenkbar gelagert ist.

3. Schweißaggregat nach Anspruch 2, **dadurch gekennzeichnet, dass** jede Elektrode (6) an einem - bezüglich einer Vertikalen - unteren Ende (13) eines durch einen Antrieb (14) um eine Hebelachse (15) schwenkbaren Elektrodenhebels (12) um die Achse (11) verdrehbar befestigt ist.

4. Schweißaggregat nach Anspruch 3, **dadurch gekennzeichnet, dass** die Hebelachse (15) des Elektrodenhebels (12) parallel zur Achse (11) positioniert ist.

5. Schweißaggregat nach Anspruch 3, **dadurch gekennzeichnet, dass** ein die Achse (11) bildender Schwenkbolzen (17) gegen den Widerstand einer Feder (19) entlang einer Vertikalen relativ zum Elektrodenhebel (12) verschiebbar ausgebildet ist.

6. Schweißaggregat nach Anspruch 1, **dadurch gekennzeichnet, dass** die Elektrode (6) durch ein allseitig bewegliches Gelenk (20) mit der Aggregathälfte (5) verbunden ist.

7. Schweißaggregat nach Anspruch 1, **dadurch gekennzeichnet, dass** die Elektrode (6) durch ein allseitig bewegliches Gelenk (20) mit dem Elektrodenhebel (12) verbunden ist.

## Claims

1. A welding unit for welding two rails (2) of a track (3), the welding unit consisting of two unit halves (5) which are displaceable towards one another in the longitudinal direction of the rails, wherein a respective pair of electrodes (6) is associated with each unit half (5), the electrodes (6) having contact surfaces (7) for application to the rail (2) which are provided for current transmission, each electrode (6) having two contact surfaces (7) separate from one another, **characterized in that** the two contact surfaces (7) enclose an acute angle α with one another which depends on the type of rail to be welded, wherein the upper contact surface (7) - with regard to a vertical - of the electrode (6) is designed for application to a bottom flank (9), adjoining a rail web (16), of a rail head (10), and the lower contact surface (7) is designed for application to a rail base shoulder (8) also adjoining the rail web (16).

2. A welding unit according to claim 1, **characterized in that** each electrode (6) is mounted for pivoting about an axis (11) extending parallel to the longitudinal direction (4) of the rails.

3. A welding unit according to claim 2, **characterized in that** each electrode (6) is fastened to a lower end (13) - with regard to a vertical - of an electrode lever (12) for rotation about the axis (11), the electrode lever (12) being pivotable by means of a drive (14) about a lever axis (15).

4. A welding unit according to claim 3, **characterized in that** the lever axis (15) of the electrode lever (12) is positioned parallel to the axis (11).

5. A welding unit according to claim 3, **characterized in that** a pivot bolt (17) forming the axis (11) is designed to be displaceable along a vertical direction relative to the electrode lever (12) against the resistance of a spring (19).

6. A welding unit according to claim 1, **characterized in that** the electrode (6) is connected to the unit half (5) via a universal joint (20).

7. A welding unit according to claim 1, **characterized in that** the electrode (6) is connected to the electrode lever (12) via a universal joint (20).

## Revendications

1. Module de soudage pour souder deux rails (2) d'une voie ferrée (3), constitué de deux moitiés de module (5) pouvant coulisser l'une par rapport à l'autre dans la direction longitudinale des rails auxquelles une paire d'électrodes (6) prévues pour la transmission électrique, présentant des surfaces de contact (7) pour l'appui sur le rail (2) sont à chaque fois associées, lesquelles présentent chacune deux surfaces de contact (7) séparées l'une de l'autre, **caractérisé en ce que** les deux surfaces de contact (7) incluent ensemble un angle aigu α en fonction du type de rail à souder, dans lequel la surface de contact supérieure (7) de l'électrode (6) par rapport à une verticale est réalisée pour l'appui sur un flanc inférieur (9) adjacent à une âme du rail (16) d'une tête de rail (10) et la surface de contact inférieure (7) est réalisée pour l'appui sur un flanc de patin du rail (8) également adjacent à l'âme du rail (16).

2. Module de soudage selon la revendication 1, **caractérisé en ce que** chaque électrode (6) est logée de manière pivotante autour d'un axe (11) s'étendant parallèlement à la direction longitudinale des rails (4).

3. Module de soudage selon la revendication 2, **caractérisé en ce que** chaque électrode (6) est fixée à une extrémité inférieure (13) par rapport à une verticale d'un levier d'électrode (12) pivotant autour d'un axe de levier (15) grâce à un entraînement (14) de manière à pouvoir tourner autour de l'axe (11).

4. Module de soudage selon la revendication 3, **caractérisé en ce que** l'axe de levier (15) du levier d'électrode (12) est positionné parallèlement à l'axe (11).

5. Module de soudage selon la revendication 3, **caractérisé en ce qu'**un boulon pivotant (17) formant l'axe (11) est réalisé de manière à pouvoir coulisser contre la résistance d'un ressort (19) le long d'une verticale par rapport au levier d'électrode (12).

6. Module de soudage selon la revendication 1, **caractérisé en ce que** l'électrode (6) est reliée à la moitié de module (5) par une articulation (20) mobile de tous les côtés.

7. Module de soudage selon la revendication 1, **caractérisé en ce que** l'électrode (6) est reliée au levier d'électrode (12) par une articulation (20) mobile de tous les côtés.
